# EUROPÄISCHE PATENTSCHRIFT

(11) **EP 0 567 818 B1**
(45) Veröffentlichungstag und Bekanntmachung des Hinweises auf die Patenterteilung: **02.07.1997**
(21) Anmeldenummer: 93105830.9
(22) Anmeldetag: 08.04.1993
(51) Int. Cl.: C08F 6/00, B01D 5/00

(54) **Verfahren zum Entfernen von niedermolekularen, zähen Produkten bei der Hochdruckpolymerisation des Ethylens**
Process for removing low molecular weight, tough products in high-pressure ethylene polymerisation
Procédé pour éliminer les produits visqueux, de bas poids moléculaires, lors de la polymérisation de l'éthylène à haute pression

(30) Priorität: 30.04.1992 DE 4214173
(43) Veröffentlichungstag der Anmeldung: 03.11.1993
(73) Patentinhaber: BASF Aktiengesellschaft, 67063 Ludwigshafen (DE)
(72) Erfinder: Pfleger, Klaus, Dr., W-5047 Wesseling (DE); Schiller, Siegfried, W-5040 Bruehl (DE); Arnold, Gerhard, W-5047 Wesseling (DE); Mueller, Herbert, W-5040 Bruehl (DE)

(56) Entgegenhaltungen:
- EP-A- 0 568 832
- DE-A- 954 921
- DE-A- 1 445 229
- US-A- 2 928 885
- US-A- 3 336 281
- US-A- 3 481 349

## Beschreibung

Die Erfindung betrifft ein Verfahren zum Entfernen von niedermolekularen, zähen Produkten bei der Hochdruckpolymerisation des Ethylens, wobei das im Reaktor nicht umgesetzte Gas und obige Produkte über ein System von mehreren hintereinandergeschalteten Kühlern und jeweils nachgeschalteten Abscheidern geführt werden.

Ein solches Verfahren ist in der DE-C-954 921 sowie der nicht vorgängigen europäischen Anmeldung 93105812.7 (EP0568832) beschrieben. Danach wird nicht umgesetztes Gas = nicht umgesetzte Monomere, meist Ethylen bzw. Ethylen im Gemisch mit anderen Monomeren, wie Vinylester, und andere mit Ethylen polymerisierbare, jedoch bei der Reaktion nicht völlig umgesetzte Kohlenwasserstoffe, nach der Reaktion gekühlt und zur Reaktion zurückgeführt, allgemein definiert als Kreisgasführung. Diese Kreisgasführung erfolgt über ein System von mehreren Kühlern, denen jeweils ein Abscheider nachgeschaltet ist.

Bei dem Verfahren nach der DE-A-1 445 229 wird das bei der Hochdruckpolymerisation von Ethylen in Gegenwart von Lösungsmittel entstehende Polyethylen und das Niederdruckkreisgas von Lösungsmitteln dadurch befreit, daß das Polyethylen in einem Hochdruckabscheider bei einem Druck von mehr als 1,51·10⁷ Pa abgeschieden und in einem Niederdruckabscheider entspannt wird, aus welchem das mitgeführte restliche Ethylen zusammen mit dem Lösungsmittel über einen Kühler in einen Abscheider geführt wird. Das im Hochdruckabscheider abgeschiedene Ethylen wird gekühlt, zum Teil entspannt, vom Lösungsmittel getrennt und als Niederdruckkreisgas mit dem Teilgasstrom aus dem Niederdruckabscheider vereinigt, komprimiert und dem Reaktor wieder zugeführt.

Aus der US-A-3 481 349 ist es bekannt, flüchtige Kohlenwasserstoffe aus einem Druckbehälter mit Hilfe eines Druckhalteventils derart auszutragen, daß das Druckhalteventil über ein zweites stromab angeordnetes Ventil gesteuert wird.

Bei der Styrol- und/oder Styrol/Butadien-Polymerisation, bei der Lösungsmittel und nicht umgesetzte Monomere aus dem Druckbehälter zu entfernen sind, soll hierdurch das Überreissen von Feststoffen verhindert werden.

Die erwähnten niedermolekularen, zähen Produkte sind verfahrenstechnisch unerwünscht, da sie zu Störungen während des Prozeßablaufes und zur Abstellung des Reaktors führen.

Diese störenden Produkte werden durch bekannte Verfahrensmaßnahmen aus den Abscheidern entfernt, beispielsweise beschrieben in den US-Patentschriften 3 117 953; 3 306 889 und 3 336 281.

Besonders nachteilig wirkt sich das vorab Aufgezeigte bei den Kühlern der Großreaktoren aus. Diese Kühler haben Längen zwischen 300 und 500 m. Es ist wegen der im Kreisgas vorhandenen, zähen Produkte nicht möglich, mit parallel geschalteten Kühlern zu arbeiten, da innerhalb kurzer Zeit die Belegung an Kühlflächen zumindest eines Kühlstranges bevorzugt erfolgt.

Außerdem erweist sich als Nachteil, daß bei der Abscheidung die störenden Produkte sich auf den Innenflächen der Kühler absetzen und dort festkleben, wobei sich wiederum verfahrenstechnisch nachstehende Nachteile ergeben:
a) Verminderung des Wärmeübergangs und somit Reduzierung der Kühlwirkung der Kühler.
b) Anstieg der Gastemperatur in dem Kühlsystem und daraus resultierend ein Anstieg der Temperatur auf der Saugseite des Höchstdruckverdichters.
c) Ausgelöst durch die steigenden Gastemperaturen verlagert sich die Abscheidung der niedermolekularen, zähen Produkte auf die letzten Kühler, dies kann bei noch weiter steigenden Gastemperaturen zur Folge haben, daß diese Produkte letztendlich in den Höchstdruckverdichter gelangen.
d) Im Extremfall kann die Belegung eines Kühlers so stark werden, daß eine Verstopfung entsteht; als Folge einer solchen Blockierung des Gasweges in der Kreisgasführung sind Fälle von Apparateschädigungen bekannt geworden.

Die bisher eingesetzten Methoden zur Begrenzung der anfallenden Mengen an zähen Produkten in der Kreisgasführung bzw. die in der Literatur bekannten Verfahren zu deren Beseitigung sind unzureichend und draüber hinaus sehr aufwendig.

In der US-PS 3 306 889 wird beispielsweise der Einbau eines zusätzlichen Kühlers auf der Saugseite des Höchstdruckverdichters vorgeschlagen; diese Methode soll das unzulängliche Verfahren der fraktionierten Kühlung - die verschiedenen Kühler werden mit Kühlmedien unterschiedlicher Temperatur beaufschlagt - oder der aufwendige Einsatz von Lösungsmitteln zur Beseitigung der zähen Produkte ablösen.

Es war Aufgabe der Erfindung, ein Verfahren zu entwickeln, mit dem das Festkleben der niedermolekularen, zähen Produkte auf den Kühlflächen der Kühler vermieden wird, und die Gastemperatur in der gesamten Kreisgasführung sowie auf der Saugseite des Höchstdruckverdichters auch bei einem Dauerbetrieb des Reaktors von mehr als 50 Tagen konstant bleibt.

Diese Aufgabe wird erfindungsgemäß dadurch gelöst, daß das System mittels zwei Druckhalteventilen in drei Teile aufgeteilt wird, wobei der Druck in jedem Teil um mindestens 2.10⁶ Pa (20 bar) höher eingestellt wird als in dem vorangehenden Teil, und die beiden Druckhalteventile derart periodisch für Kurze Zeit geöffnet werden, daß die Gastemperatur auf der Saugseite des Höchstdruckverdichters 40°C beträgt.

Nach einem weiteren Merkmal der Erfindung wird die Druckdifferenz der drei Teile bei 2·10⁶ bis 8·10⁶ Pa (20 bis 80 bar) gehalten. Besonders vorteilhaft ist eine Druckdifferenz zwischen 3·10⁶ und 5·10⁶ Pa (30 bis 50 bar).

Durch diese erfindungsgemäße Maßnahme kommt es überraschenderweise zu einer Reduktion der Menge der zähen Produkte, die aus den Hochdruck-Produktabscheider mitgerissen werden. Offenbar dämpfen die installierten Druckhalteventile - siehe Zeichnung - die in den Hochdruck-Kreis beim "Reizvorgang" vom Reaktor kommenden Druckstöße.

Der Reaktor wird in regelmäßigen Zeitabständen durch plötzliche Druckabsenkung um maximal 3·10⁷ Pa (300 bar) "gereizt"; der "Reizvorgang" wird dabei durch Öffnen des Ventils = "Reizventil" am Ende des Reaktors ausgeführt. Hierbei treten in der Entspannungsdüse des Hochdruck-Produktabscheiders überhöhte Geschwindigkeiten des Gas-/Schmelze-Gemisches auf, die das Produkt im Hochdruck-Produktabscheider derart vernebeln, daß die Abscheidewirkung stark beeinträchtigt wird und hierdurch ein Übertritt von Produkt in die nachgeschalteten Systeme - auch wegen der erhöhten Austrittsgeschwindigkeit nach dem Hochdruck-Produktabscheider - unvermeidbar ist.

Die eingebauten Druckhalteventile gemäß der Erfindung werden derart phasenverschoben-synchron mit dem Reizventil geregelt, daß während des "Reizvorgangs", beispielsweise während der Vernebelungsphase die Austrittsgeschwindigkeit aus dem Hochdruck-Produktabscheider reduziert wird - bei ansteigendem Druck im Hochdruck-Produktabscheider - so daß einem Mitreißen von Produkt in die nachfolgenden Systeme entgegengewirkt wird.

Die Druckhalteventile gemäß erfindungsgemäßem Verfahren werden darüber hinaus periodisch für kurze Zeit geöffnet, wodurch es zum Druckausgleich im gesamten System kommt; weitaus wichtiger ist dabei jedoch, daß durch das Öffnen der Druckhalteventile eine plötzliche Beschleunigung der Gasmasse in den Kühlern vor und nach den Druckhalteventilen bewirkt wird. Es zeigte sich, daß auf diese Weise eine ständige Reinigung der Kühler von den zähen Produkten gewährleistet werden kann.

Mit dem erfindungsgemäßen Verfahren gelingt es, auch nach mehrwöchigem Betrieb die Gastemperaturen in den Kühlern des Hochdruckkreises konstant und auf der Saugseite des Höchstdruckverdichters bei 40°C zu halten.

Ohne die erfinderischen Maßnahmen steigen hingegen die Gastemperaturen auf der Saugseite des Höchstdruckverdichters mit zunehmender Betriebszeit stetig an und erreichen nach etwa vier Wochen 50°C. Ein weiterer Nachteil der bisherigen Verfahren ist die große Menge an zähen Produkten, die nach einer Abstellung des Reaktors durch "Auskochen" aus den Kühlern des Hochdruck-Kreises entfernt werden muß. Beim Entfernen der Produktbeläge durch "Auskochen" wird Dampf von ca. 200°C auf die Kühlermäntel gestellt, wodurch die Substanzen aufgeschmolzen werden; danach werden die Kühler mit unter Druck stehendem Stickstoff freigeblasen.

Um die Belegung der Kühlflächen mit zähen Produkten gering zu halten, wird gleichzeitig zu den vorab aufgezeigten erfindungsgemäßen Maßnahmen am Eingang der Kühler ein Lösungsmittel in den Gasstrom eindosiert. Als Lösungsmittel haben sich vor allem paraffinische Kohlenwasserstoffe mit 8 bis 15 C-Atomen bewährt; vorzugsweise setzt man Paraffine mit 10 bis 12 C-Atomen ein, wie beispielsweise iso-Dodekan oder n-Dekan. Es ist auch möglich, Gemische von verschiedenen paraffinischen Kohlenwasserstoffen einzusetzen.

Im Gegensatz zu den bekannten Verfahren wird gemäß dem erfindungsgemäßen Verfahren nach mehrwöchigem Betrieb eine bedeutend geringere Menge an zähen Substanzen bei einem anschließenden "Auskoch"-Vorgang erhalten.

### Beispiel

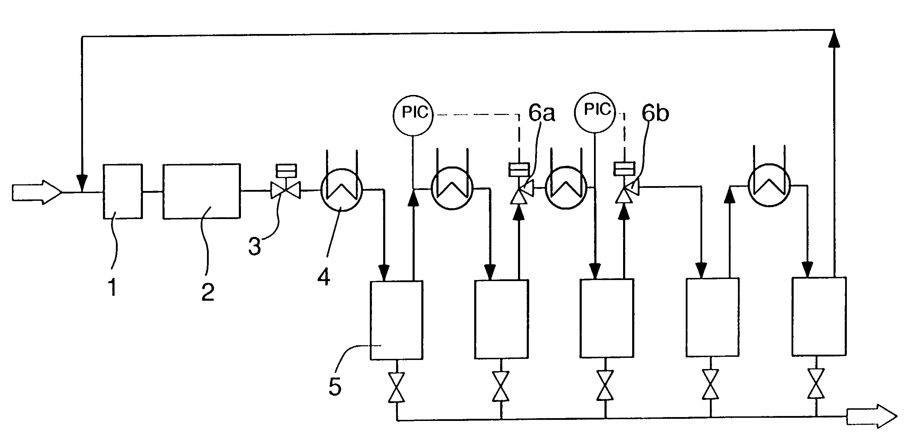

In der Zeichnung bedeuten:
- 1: = Höchstdruckverdichter
- 2: = Reaktor
- 3: = Druckhalteventil des Reaktors = Reizventil
- 4: = Kühler
- 5: = Abscheider
- 6a/6b: = Druckhalteventil

Bei einem Rohrreaktor, in dessen Hochdruck-Kreis eine Gasmenge von 15 000 kg/Stunde gekühlt wird, sind zwei Druckhalteventile - siehe Zeichnung - eingebaut, mit dem ersten Druckhalteventil 6a wird der Druck im ersten Teil des Kreises bei 3,5·10⁷ Pa (350 bar) gehalten. Mittels des 2. Druckhalteventils 6b wird der Druck im zweiten - zwischen den beiden Druckhalteventilen - und dritten Teil des Hochdruck-Kreises auf 3·10⁷ Pa bzw. 2,7·10⁷ Pa (300 bzw. 270 bar) gehalten.

Nach der Inbetriebnahme des Reaktors beträgt am Ausgang des Kühlers 4 - siehe Zeichnung - die Gastemperatur 85°C und auf der Saugseite des Höchstdruckverdichters 40°C.

Beide Druckhalteventile werden im Rhythmus von 10 Sekunden geöffnet, wobei eine Abstimmung mit dem "Reizimpuls-Zyklus" des Druckhalteventils am Ende der Reaktionszone des Reaktors derart vollzogen ist, daß beide Druckhalteventile phasenverschoben-synchron arbeiten und die Druckhalteventile zu keinem Zeitpunkt gleichzeitig offen oder geschlossen sind.

Es zeigte sich, daß nach einer Betriebszeit von 50 Tagen nur geringe Mengen an niedermolekularen, zähen Produkten in allen Kühlern des Hochdruck-Kreises vorlagen, und die Gastemperatur am Ausgang des ersten Kühlers immer noch bei 85°C und die Gastemperatur auf der Saugseite des Höchstdruckverdichters konstant bei 40°C lag.

So wurden nach der Abstellung des Reaktors durch "Auskochen" aus den ersten Kühlern (Teil I des Hochdruck-Kreises) 10 kg, aus den Kühlern der zweiten Hälfte des Hochdruck-Kreises (Teil II des Hochdruck-Kreises) 5 kg zähe Produkte erhalten.

### Vergleichsbeispiel

Der Rohrreaktor, durch dessen Hochdruck-Kreis eine Gasmenge von 15 000 kg/Stunde gefahren wird, ist nicht mit einem Druckhalteventil ausgerüstet; der Druck im Hochdruck-Kreis betrug 3,3·10⁷ Pa (330 bar). Die Gastemperatur auf der Saugseite des Höchstdruckverdichters betrug 40°C und stieg aufgrund der fortschreitenden Belegung der Kühler mit zunehmender Betriebszeit nach 50 Tagen auf 52°C an.

Beim "Auskochen" des Hochdruck-Kreises nach Abstellung des Reaktors wurden aus seinen ersten Kühlern 66,5 kg, aus den Kühlern des zweiten Teils des Hochdruck-Kreises 283 kg des zähen Produktes erhalten.

## Patentansprüche

1. Verfahren zum Entfernen von niedermolekularen, zähen Produkten bei der Hochdruckpolymerisation des Ethylens, wobei das im Reaktor nicht umgesetzte Gas und obige Produkte über ein System von mehreren hintereinandergeschalteten Kühlern und jeweils nachgeschalteten Abscheidern geführt werden, dadurch gekennzeichnet, daß das System mittels zwei Druckhalteventilen in drei Teile aufgeteilt wird, wobei der Druck in jedem Teil um mindestens 2·10⁶ Pa (20 bar) höher eingestellt wird als in dem vorangehenden Teil, und die beiden Druckhalteventile periodisch für Kurze Zeit geöffnet werden, daß die Gastemperatur auf der Saugseite des Höchstdruckverdichters 40°C beträgt.

2. Verfahren nach Anspruch 1, dadurch gekennzeichnet, daß die Druckdifferenz der drei Teile bei 2·10⁶ bis 8·10⁶ Pa (20 bis 80 bar) gehalten wird.

## Claims

1. A process for the removal of low-molecular-weight, viscous products during the high-pressure polymerization of ethylene, where the gas which has not reacted in the reactor and the above products are passed through a system of a plurality of consecutive condensers, each of which is followed by a separator, which comprises dividing the system into three parts by means of two pressure-retention valves, the pressure in each part being set at least 2·10⁶ Pa (20 bar) higher than in the preceding part, and briefly opening the two pressure-retention valves periodically so that the gas temperature on the inlet side of the extreme pressure compressor is 40°C.

2. A process as claimed in claim 1, wherein the pressure difference between the three parts is kept at from 2·10⁶ to 8·10⁶ Pa (from 20 to 80 bar).

## Revendications

1. Procédé pour éliminer les produits à bas poids moléculaire, visqueux, formés à la polymérisation de l'éthylène sous haute pression, dans lequel les gaz non convertis dans le réacteur et les produits en question sont conduits dans un système de plusieurs réfrigérants successifs suivis chacun d'un séparateur, caractérisé par le fait que le système est divisé à l'aide de deux clapets de retenue en trois compartiments, la pression étant réglée dans chaque compartiment à un niveau supérieur d'au moins 2 x 10⁶ Pa (20 bar) à celle du compartiment précédant, et les deux clapets de retenue sont ouverts périodiquement pendant un court moment en sorte que la température des gaz du côté aspiration du compresseur à la pression la plus forte soit de 40° C.

2. Procédé selon la revendication 1, caractérisé par le fait que l'on maintient la différence de pression entre les trois compartiments à un niveau de 2 x 10⁶ à 8 x 10⁶ Pa (2 à 80 bar).
